(19) **Europäisches Patentamt / European Patent Office / Office européen des brevets**

(11) **EP 3 985 597 A1**

(12) **EUROPEAN PATENT APPLICATION**
published in accordance with Art. 153(4) EPC

(43) Date of publication:
**20.04.2022 Bulletin 2022/16**

(21) Application number: **20841037.3**

(22) Date of filing: **07.07.2020**

(51) International Patent Classification (IPC):
**G06Q 40/04** (2012.01)

(52) Cooperative Patent Classification (CPC):
**G06Q 20/06; G06Q 30/00; G06Q 40/04;
G06Q 50/26**

(86) International application number:
**PCT/CN2020/100598**

(87) International publication number:
**WO 2021/008405 (21.01.2021 Gazette 2021/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **12.07.2019 CN 201910630983**

(71) Applicant: **Shanghai Weilian Information
Technology Co., Ltd.
Shanghai 200050 (CN)**

(72) Inventor: **TIAN, Xinli
Shanghai 201203 (CN)**

(74) Representative: **Appleyard Lees IP LLP
15 Clare Road
Halifax HX1 2HY (GB)**

(54) **METHOD AND APPARATUS FOR PROCESSING CARBON EMISSION REDUCTION DATA, AND COMPUTER READABLE STORAGE MEDIUM**

(57) A method and apparatus for processing carbon emission reduction data, and a computer readable storage medium. The method includes: determining a target smart contract matching an attribute of an object carrying out a carbon emission reduction activity (210); determining a carbon emission reduction equivalent corresponding to the object based on the target smart contract and carbon activity data corresponding to the carbon emission reduction activity (220); and sending the carbon emission reduction equivalent to a node of a blockchain platform to store same in a first account associated with a corporate user on the blockchain platform (230). The solution can be used to effectively and accurately calculate a carbon emission or an emission reduction of a user.

**FIG. 2**

EP 3 985 597 A1

## Description

### Technical Field

The present disclosure relates to the technical field of computers, and more specifically, to a method and an apparatus for processing carbon emission reduction data, and a computer readable storage medium.

### Background

Greenhouse gases are some gases in the atmosphere that can absorb solar radiation reflected from the ground and re-emit the radiation. Carbon emission is an abbreviation for greenhouse gas emission. The most important gas in greenhouse gases is carbon dioxide, so the term Carbon is used as a representative. According to current research, greenhouse gases will cause the earth's surface temperature to rise, which will have an impact and harm on the environment and climate. Therefore, how to control carbon emission and how to reduce the carbon emission through emission reduction technologies have become one of the most important environmental protection topics at present.

In order to control global or national carbon emissions, the current method usually adopted is that international organizations or national institutions of various countries allocate carbon emission credits or specify carbon emission reduction targets to energy-consuming corporate users. Corporate users whose actual carbon emission exceeds their emission quotas will not be able to continue production. For example, in China, relevant national authorities have chaired and approved China Certified Emission Reduction (CCER) for projects or corporate users that implement carbon emission reduction. The corporate users can, for example, implement new energy terminal projects to reduce greenhouse gases so as to obtain the corresponding quantity of CCER. Corporate users with excessive carbon emission can obtain corresponding carbon emission credits from corporate users who implement carbon emission reduction activities in some way to continue production. However, these existing solutions are usually aimed at enterprise-level users, and it is difficult to calculate users' carbon emissions or emission reductions.

### Summary of the Invention

Embodiments of the present disclosure provide a data processing solution.

In a first aspect of the present disclosure, a method for processing carbon emission reduction data is provided. The method includes: determining a target smart contract matching an attribute of an object carrying out a carbon emission reduction activity; determining a carbon emission reduction equivalent corresponding to the object based on the target smart contract and carbon activity data corresponding to the carbon emission reduction activity; and sending the carbon emission reduction equivalent to a node of a blockchain platform to store the carbon emission reduction equivalent in a first account associated with a corporate user on the blockchain platform.

In a second aspect of the present disclosure, an electronic apparatus for processing carbon emission reduction data is provided. The electronic apparatus for processing carbon emission reduction data includes one or more processors; and a storage device configured to store one or more programs, wherein the one or more programs, when executed by the one or more processors, cause the one or more processors to implement the method according to the first aspect of the present disclosure.

In a third aspect of the present disclosure, a computer readable storage medium is provided. The computer readable storage medium stores a computer program thereon, and the program, when executed by a processor, implements the method according to the first aspect of the present disclosure.

The Summary of the Invention part is provided to introduce the selection of concepts in a simplified form, which will be further described in the Detailed Description below. The Summary of the Invention part is neither intended to identify key features or main features of the present disclosure, nor intended to limit the scope of the present disclosure.

### Description of the Drawings

The above and other objectives, features, and advantages of the present disclosure will become more apparent by describing example embodiments of the present disclosure in more detail with reference to the accompanying drawings. In the example embodiments of the present disclosure, the same reference numerals generally represent the same members.

FIG. 1 shows a schematic diagram of a system capable of implementing some embodiments of the present disclosure;
FIG. 2 shows a flow chart of a method for processing carbon emission reduction data according to the embodiments of the present disclosure;
FIG. 3 shows a flow chart of a carbon currency issuing method according to the embodiments of the present disclosure;
FIG. 4 shows a flow chart of a carbon currency cancellation method according to the embodiments of the present disclosure;
FIG. 5 shows a flow chart of a method for issuing corporate carbon currency to an individual user according to the embodiments of the present disclosure;
FIG. 6 schematically shows a block diagram of an electronic apparatus for processing carbon emission reduction data suitable for implementing the embodiments of the present disclosure.

In the accompanying drawings, the same or corresponding numerals represent the same or corresponding parts.

## Detailed Description

Preferred embodiments of the present disclosure will be described in more detail below with reference to the accompanying drawings. Although the preferred embodiments of the present disclosure are shown in the accompanying drawings, it should be understood that the present disclosure can be implemented in various forms and should not be limited to the embodiments set forth herein. Rather, these embodiments are provided so that the present disclosure will be more thorough and complete, and will be able to fully convey the scope of the present disclosure to those skilled in the art.

As used herein, the term "comprising" and the variations thereof mean open inclusion, i.e., "including but not limited to." Unless specifically stated, the term "or" means "and/or." The term "based on" means "based at least in part on." The terms "an example embodiment" and "an embodiment" indicate "at least one example embodiment." The term "another embodiment" indicates "at least one additional embodiment." The terms "first," "second," and the like may refer to different or identical objects. Other explicit and implicit definitions may also be included below.

As described above, in order to control global or national carbon emissions, in China, relevant national authorities have chaired and approved China Certified Emission Reduction (CCER) for projects or corporate users that implement carbon emission reduction. The corporate users can, for example, implement new energy terminal projects to reduce greenhouse gases so as to obtain the corresponding quantity of CCER. Corporate users with excessive carbon emission can obtain corresponding carbon emission credits from corporate users who implement carbon emission reduction activities in some way to continue production.

However, these existing solutions are usually aimed at enterprise-level users, and it is difficult to calculate users' carbon emissions or emission reductions. In this way, carbon emission reductions generated when individual users use some energy-saving tools (for example, new energy vehicles, energy-saving home appliances, etc.) or services (for example, services for recovering of second-hand items, services for garbage sorting, etc.) are difficult to include in a carbon emission reduction ecological platform to be certified, managed and traded as carbon emission reduction resources. As a result, a large quantity of carbon emission reduction resources are idle and wasted, which is not conducive to the improvement of the enthusiasm of individual users and corporate users (for example, new energy terminal manufacturers, corporate users that provide second-hand item recycling services, etc.) to participate in carbon emission reduction activities.

On the other hand, with the improvement of living standards, such as the increase in the number of personal cars, the increase and popularization of home appliances, and the acceleration of the replacement of various living materials, the carbon emission generated by personal life is increasing, this part of carbon emission is gradually becoming a non-negligible part of global carbon emission, with huge potential value.

Therefore, how to quantify the carbon emission reduction activities of individual users to generate value so that the individual users can benefit from their carbon emission reduction activities has become a problem worthy of study.

In order to solve the above-mentioned problems and other potential problems, an exemplary embodiment of the present disclosure proposes a data processing solution. In that solution, a target smart contract matching an attribute of an object carrying out a carbon emission reduction activity is determined first, then a carbon emission reduction equivalent corresponding to the object is determined based on the target smart contract and carbon activity data corresponding to the carbon emission reduction activity, and afterwards, the carbon emission reduction equivalent is sent to a node of a blockchain platform to be stored in a first account associated with a corporate user on the blockchain platform. By using this solution, a carbon emission or an emission reduction of a user can be effectively and accurately calculated.

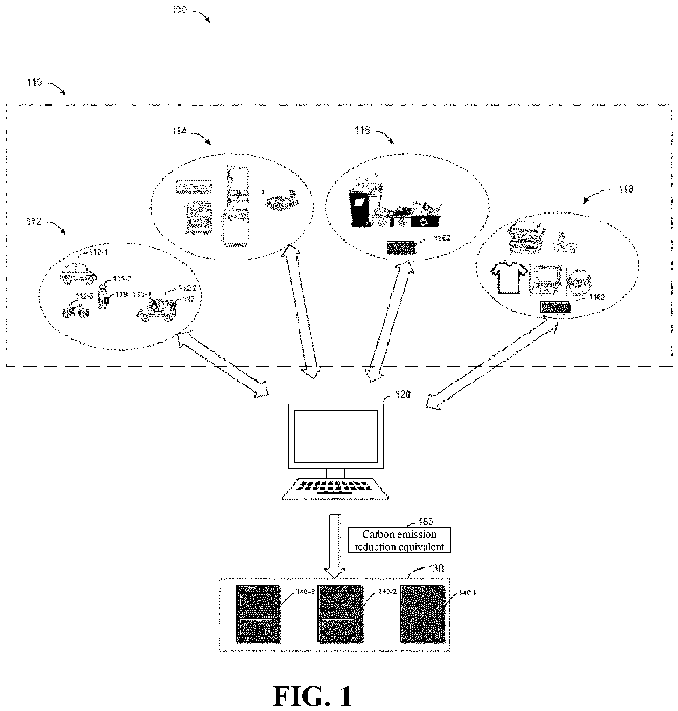

FIG. 1 shows a schematic diagram of system 100 capable of implementing some embodiments of the present disclosure. As shown in FIG. 1, system 100 includes object 110 carrying out a carbon emission reduction activity, business system 120, and blockchain platform 130. Object 110 carrying out a carbon emission reduction activity includes multiple types of objects 112, 114, 116, and 118 (for ease of description, they are collectively or individually referred to as object 110 hereinafter). Blockchain platform 130 may include a plurality of blockchain nodes 140-1, 140-2, and 140-3 (for ease of description, they are collectively or individually referred to as blockchain node 140 hereinafter).

As shown in FIG. 1, according to different application scenarios, object 110 carrying out a carbon emission reduction activity may be, for example, transportation apparatus 112 (such as a new energy vehicle), energy-saving home appliance 114, recovered item 116, and recycled item 118 (that is, second-hand items that are recycled for secondary use), etc.

Transportation apparatus 112 may be, for example, battery electric vehicle (BEV) 112-1, hybrid electric vehicle (HEV) 112-2, and shared bicycle 112-3, etc. BEV 112-1 supplies power to an electric motor through a battery which is fully charged beforehand, and then the electric motor drives the vehicle, while battery power is supplemented by an external power source. HEV 112-2 is a vehicle that includes an internal combustion engine and one or more electric motors. Each transportation apparatus 112 corresponds to a unique identifier, and the identifier includes an ID that uniquely identifies transportation apparatus 112. The ID is, for example, a frame number of transportation apparatus 112, or a combination of the frame number and an engine number of transportation apparatus 112.

In some embodiments, transportation apparatus 112 may be configured with vehicle-mounted module 115, which is, for example, a vehicle-mounted intelligent terminal apparatus with a wireless communication function, for dynamic monitoring and management of running vehicles. The vehicle-mounted intelligent terminal apparatus can record and send data such as the ID and carbon activity data (such as mileage, fuel consumption, and power consumption) of transportation apparatus 112. In some embodiments, vehicle-mounted module 115 may also send the recorded ID and carbon activity data of the transportation apparatus via wireless communication device 117. For example, after individual user 113-1 uses transportation apparatus 112-2, transportation apparatus 112-2 may further send the ID and carbon activity data recorded by vehicle-mounted module 115 to business system 120 via a network.

In some embodiments, the ID and carbon activity data of transportation apparatus 112 are sent via a mobile terminal of an individual user. Taking shared bicycle 112-3 as an example, after individual user 113-2 uses shared bicycle 112-3, mobile terminal 119 owned by individual user 113-2 who uses shared bicycle 112-3 can obtain an ID (such as a frame number) and carbon activity data (such as mileage) of the shared bicycle via a loaded application, and send the ID and the carbon activity data to business system 120.

Similarly, energy-saving home appliance 114 may include various types of energy-saving home appliances, such as air conditioners, washing machines, refrigerators, and so on. Herein, energy-saving home appliance 114 may be a home appliance configured with a wired or wireless communication module. For example, energy-saving home appliance 114 may be a home appliance with an Internet of Things (IoT) function. In addition, each energy-saving home appliance 114 may be assigned with or have an identifier (ID) that is unique in entire system 100 in any other manner. Energy-saving home appliance 114 can record its carbon activity data (such as power consumption) under various working conditions, and send the carbon activity data and the ID of energy-saving home appliance 114 to business system 120 through its communication module.

Both item 116 and item 118 can include paper products, plastic products, glass products, metal products, home appliances, etc. The main difference between item 116 and item 118 is that after recovered, item 116 is processed (such as destroyed), and after recovered, item 118 is recycled again. For example, for an old book, if it is recovered as a second-hand book for sale or otherwise circulated to other users for use, the old book is considered as item 118. On the contrary, if the old book is recovered and then destroyed, the old book is considered as item 116.

Item 116 and item 118 usually do not have the ability to communicate with business system 120, but through a system of a mechanism that performs recovery of item 116 and item 118 (such as system 1162 configured to recover item 116 and system 1182 configured to recover item 118 as shown in FIG. 1) to record corresponding carbon activity data, such as the number or weight of recovered paper products, the weight or quantity of recovered plastic or metal products, and the type or quantity of recovered home appliances. Those skilled in the art can understand that the carbon activity data is not limited to those listed here, but may also include various other possible data related to carbon emission reduction. System 1162 or 1182 can send the carbon activity data generated by recovered item 116 or 118 and the ID of the user who executes item 116 or 118 (that is, an owner of item 116 or 118, for example, aforementioned user 113-1 or 113-2) or an ID of system 1162 or 1182 to business system 120 together.

In addition, since item 116 and item 118 can be classes of the same item in different application scenarios, such classification information of the same item (that is, whether it is an item to be recovered or an item to be recycled) can also be sent to business system 120 together. In this way, business system 120 can match different models to calculate carbon emission reduction equivalents.

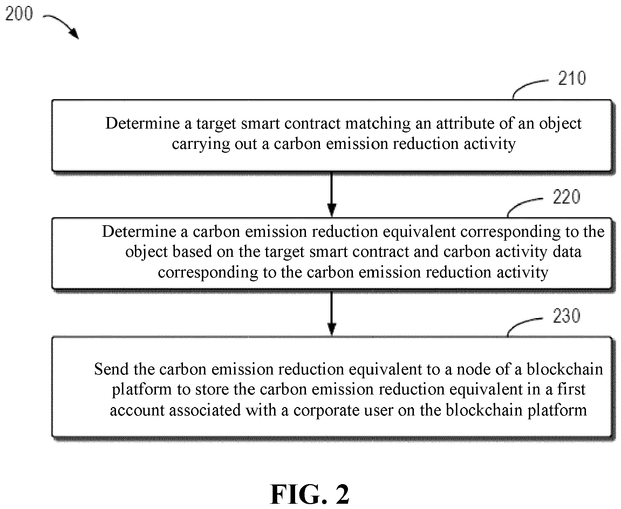

After obtaining these data, business system 120 will process them to generate carbon emission reduction equivalent 150, as described below with reference to FIG. 2. As shown in FIG. 1, business system 120 may send generated carbon emission reduction equivalent 150 to node 140 of blockchain platform 130.

Each blockchain node 140 may be deployed with multiple smart contracts. FIG. 1 shows two smart contracts 142 and 144 deployed on blockchain node 140.

Those skilled in the art can understand that the division of business system 120 and blockchain platform 130 shown in FIG. 1 is a logical division. In fact, blockchain platform 130 may be physically a part of business system 120 or vice versa. In other words, business system 120 and blockchain platform 130 may be logically or physically implemented as a whole.

FIG. 2 shows a flow chart of method 200 for processing carbon emission reduction data according to the embodiments of the present disclosure. It should be understood that method 200 may further include an additional action that is not shown and/or may omit an action that is shown. The scope of the present disclosure is not limited in this regard. For ease of description, method 200 is described with reference to FIG. 1. FIG. 1 shows only one exemplary system that can implement the embodiments of the present disclosure. It should be understood that the system that can implement the embodiments of the present disclosure is not limited to the form shown in FIG. 1, but may include more or fewer or different components.

At 210, business system 120 may determine a target smart contract matching an attribute of object 110 carrying out a carbon emission reduction activity.

As mentioned above, according to different scenarios, object 110 may be transportation apparatus 112 (such as a new energy vehicle), energy-saving home appliance 114, recovered item 116, and recycled item 118 (that is, second-hand items that are recycled for secondary use), etc.

In some embodiments, an individual user may drive transportation apparatus 112 and use energy-saving home appliance 114 to cause transportation apparatus 112 or energy-saving home appliance 114 to produce carbon emission reduction activities. In one example, after an individual user uses transportation apparatus 112 (for example, an electric vehicle), business system 120 may obtain relevant data of the individual user's current use of transportation apparatus 112, such as identification data and carbon activity data of transportation apparatus 112. The obtained identification data may be an identifier corresponding to transportation apparatus 112. The identifier may be, for example, a frame number of transportation apparatus 112, or a combination of the frame number and an engine number of transportation apparatus 112.

The obtained carbon activity data may be, for example, carbon consumption or carbon emission reduction activity data of the object. Specifically, according to different application scenarios, the carbon activity data may include, for example, the mileage of the transportation apparatus, the quantity of fuel consumed in transportation, the electricity consumed by running of the transportation apparatus or the operation of the home appliance, the electricity and/or fuel consumed by processing recovered items, and the like.

In some embodiments, business system 120 may obtain the identification data and the carbon activity data through a local storage apparatus (not shown), a vehicle-mounted module of the transportation apparatus, a communication module of energy-saving home appliance 114, or an application of a mobile terminal of a user related to the object.

In some embodiments, business system 120 may determine whether the obtained identifier of object 110 belongs to a predetermined identifier set. The predetermined identifier set is, for example, object 110 (for example, a specific type of transportation apparatus 112 or energy-saving home appliance 114, etc.) that has been reviewed and verified in advance by a third-party authority. When it is determined that the identifier of object 110 belongs to the predetermined identifier set, the attribute corresponding to object 110 may be obtained based on the identifier, and then the target smart contract may be determined based on the obtained attribute.

In some embodiments, the attribute may be a type of object 110. Taking transportation apparatus 112 as an example, transportation apparatus 112 may include an electric transportation apparatus and a hybrid transportation apparatus. Or, for energy-saving home appliance 114, the attribute may be a type (for example, an air conditioner, a washing machine, a refrigerator, etc.), model (for example, a washing machine with washing capacity of 6 kg, 8 kg or 10 kg), and operating mode (for example, a washing machine usually has a standard mode, a mixed mode, a fast washing mode and a wool degreasing mode, etc.) of the home appliance. Since different regions may have different emission reference situations, the attribute of object 110 may also indicate a region where the carbon activity is generated. In other embodiments, in the application scenario of item recovery and item recycling, the attribute may be a type (for example, a paper product, a plastic product, a glass product, a metal product, various home appliances, etc.) and classification information (recovered or recycled) of the item.

The target smart contract is used to convert the carbon activity data into the carbon emission reduction equivalent. Taking transportation apparatus 112 as an example, different types of transportation apparatuses have differences in many factors such as displacement, power, passenger capacity, and load capacity. For energy-saving home appliance 114, different types of home appliances or different models or different operating modes of the same type of home appliance correspond to different power consumption. The above-mentioned factors often affect the calculation relationship of the carbon emission reduction equivalent. Therefore, corresponding target smart contracts can match different attributes of object 110.

In some embodiments, business system 120 may store a correspondence between various candidate smart contracts and keywords, and determine a candidate smart contract matching object 110 as the target smart contract according to the correspondence. Here, the keywords may correspond to one attribute or a combination of multiple attributes of object 110. For example, in the case where object 110 is energy-saving home appliance 114, the keyword may be set to the type of energy-saving home appliance 114 (such as an air conditioner, a refrigerator, a washing machine, etc.), or may be set to a combination of any of the type and model (such as a washing machine with washing capacity of 6 kg, 8 kg, or 10 kg), an operating mode (such as a standard mode, a mixed mode, a fast mode, etc. of a washing machine) and other attributes. For example, in the case where the keyword is the type of energy-saving home appliance 114, a candidate smart contract matching the type of object 110 may be selected from the candidate smart contracts as the target smart contract. For example, in the case where the keyword is a combination of the type and the model of energy-saving home appliance 114, a candidate smart contract matching the type and the model of object 110 simultaneously may be selected from the candidate smart contracts as the target smart contract.

Of course, those skilled in the art can understand that the settings of the keywords and the candidate smart contracts may vary depending on the implementation complexity of the system or different application scenarios.

At 220, business system 120 may determine a carbon emission reduction equivalent corresponding to object 110 based on the target smart contract and carbon activity data corresponding to the carbon emission reduction activity. In some embodiments, the carbon emission reduction equivalent may be determined based on a reference emission and an actual carbon emission.

The following will respectively introduce how to determine the reference emission and the actual emission so as to determine the carbon emission reduction equivalent in four different scenarios of transportation apparatus 112, energy-saving home appliance 114, an item recovery service and an item recycling service.

Scenario 1: the scenario of the transportation apparatus:

In some embodiments, as shown in FIG. 1, object 110 may be transportation apparatus 112. Business system 120 may determine the reference emission based on a reference emission relationship associated with the target smart contract, where the reference emission relationship is generated according to a predefined emission standard. In some embodiments, in order to calculate the reference emission of the transportation apparatus, business system 120 may, for example, use emission of a transportation apparatus (hereinafter, collectively referred to as a reference transportation apparatus typei) having the same or similar attributes (for example, the same type or the same or similar model, etc.) with transportation apparatus 112 as the reference emission relationship, and then calculate the reference emission of transportation apparatus 112. For example, business system 120 may calculate the reference emission (also referred to as BE) of transportation apparatus 112 based on the following formula:

$$BE_y = EF_{BL,i,y} * DD_{i,y} * 10^{-12}$$

$$(1)$$

where $BE_y$ represents a reference emission (gCO$_2$) within a to-be-calculated time period (y); $EF_{BL,i,y}$ represents an emission factor (gCO$_2$/km) of a reference transportation apparatus type i within the to-be-calculated time period (y); $DD_{i,y}$ represents a running distance (km) of a project transportation apparatus type i (i.e., current transportation apparatus 112) within the to-be-calculated time period (y). where:

$$EF_{BL,i,y} = SFC_i * NCV_{BL,i} * EF_{BL,i}$$

$$(2)$$

$SFC_i$ represents fuel quantity consumed per unit distance (i.e., fuel consumption rate) of the reference transportation apparatus type i, where its unit may be g/km; $NCV_{BL,i}$ represents a net heating value (J/g) of fuel consumption of the reference transportation apparatus type $i$; $EF_{BL,i}$ represents an emission factor (gCO$_2$/TJ) of fuel consumption of the reference transportation apparatus type i.

In addition, the technical improvement of the reference transportation apparatus type i may also be considered when calculating the emission factor $EF_{BL,i,y}$. In this case, the emission factor $EF_{BL,i,y}$ of the reference transportation apparatus type i may be expressed as:

$$EF_{BL,i,y} = SFC_i * NCV_{BL,i} * EF_{BL,i} * IR_t$$

$$(3)$$

where $IR_t$ represents a reference transportation apparatus technical improvement factor of the $t$ year. The technical improvement factor is usually measured in a calendar year. In one instance of the present invention, the technical improvement factor of all reference transportation apparatus types may be set to a default value 0.99. In other instances, the factor can also be adjusted according to the actual technical improvement. In this way, this solution can not only be applied to the situation of a fixed reference emission relationship, but also use a variable reference emission relationship according to time or according to the technical improvement of the reference transportation apparatus.

In some embodiments, business system 120 may also determine the actual emission based on a predetermined emission relationship related to the attribute of object 110. Then the carbon emission reduction equivalent is determined based on both the reference emission and the actual emission.

In some embodiments, when object 110 is in a scenario of the transportation apparatus, the corresponding predetermined emission relationship (i.e., a carbon emission model) may be determined according to the received identification data and carbon activity data. In one embodiment, the transportation apparatus may be divided into two types of an electric vehicle and a hybrid vehicle, thereby matching the corresponding predetermined emission relationship related to the electric vehicle or the corresponding predetermined emission relationship related to the hybrid vehicle according to the types of the transportation apparatus. In another embodiment, the carbon emission relationship may include more. In this case, it can be divided in advance by factors such as the model or parameter of the transportation apparatus.

After determining the predetermined emission relationship, business system 120 may convert the carbon activity data into a carbon emission based on the determined predetermined emission relationship. The carbon emission here represents the actual emission of the transportation apparatus (also called project emission (PE)), which refers to the emission generated by the electricity and/or fuel consumed by the transportation apparatus.

In an example, when the transportation apparatus is a hybrid vehicle, its actual emission may be obtained by the following formula:

$$PE_y = SEC_{i,y} * EF_y/(1 - TDL_y) * 10^3 + SFC_{i,y} * NCV_{i,y} * EF_{i,y} * 10^{-12}$$

(4)

where $PE_y$ represents the project emission (gCO$_2$) within the to-be-calculated time period (y); $SEC_{i,y}$ represents the electricity (kWh) consumed by the project transportation apparatus type i within the to-be-calculated time period (y); $EFy$ represents a CO$_2$ emission factor (kgCO$_2$/kWh) of power consumption of the project transportation apparatus type i within the to-be-calculated time period (y); $TDL_y$ represents an average loss leakage rate of power transmission and distribution within the to-be-calculated time period (y); $SFC_{i,y}$ represents the fuel consumption (g) of the project transportation apparatus type i within the to-be-calculated time period (y); $NCV_{i,y}$ represents a net heating value (J/g) of the oil consumption of the project transportation apparatus type i within the to-be-calculated time period (y); $EF_{i,y}$ represents a CO$_2$ emission factor (gCO$_2$/TJ) of fuel consumed by the project transportation apparatus type *i* within the to-be-calculated time period (y).

When the transportation apparatus is an electric transportation apparatus, its actual emission may be calculated by the following formula:

$$PE_y = SEC_{i,y} * EF_y/(1 - TDL_y) * 10^3$$

(5)

where $PE_y$ represents the project emission (gCO$_2$) within the to-be-calculated time period (y); $SEC_{i,y}$ represents the electricity consumption (kWh) of the project transportation apparatus type *i* within the to-be-calculated time period (y); $EFy$ represents a CO$_2$ emission factor (kgCO$_2$/kWh) of power consumption of the project transportation apparatus type *i* within the to-be-calculated time period (y); $TDL_y$ represents an average leakage rate of power transmission and distribution within the to-be-calculated time period (y).

In a simplified relationship realized above, assuming that other parameters remain unchanged, the calculation of BE is only related to the actual driving distance ($DD_{i,y}$) of the vehicle, and the calculation of PE is only related to the electricity quantity ($SEC_{i,y}$) and the fuel quantity ($SFC_{i,y}$) consumed by the vehicle, which greatly simplifies the calculation of carbon savings.

After the reference emission (BE) and the actual emission (PE) are respectively determined through the above-mentioned manner, business system 120 may determine the carbon emission reduction equivalent of using the transportation apparatus based on the actual emission and the reference emission. In some embodiments, the carbon emission reduction may be calculated by the following formula:

$$ER_y = BE_y - PE_y - LE_y$$

where $ER_y$ represents the emission reduction ($gCO_2$) within the to-be-calculated time period (y). The emission reduction ER may represent the reduction achieved due to the use of new energy transportation apparatuses, energy-saving appliances, and item recycling services, and a quantified value is called the carbon emission reduction equivalent. $BE_y$ represents the reference emission ($gCO_2$) within the to-be-calculated time period (y); $PE_y$ represents the project emission ($gCO_2$) within the to-be-calculated time period (y); $LE_y$ represents the leakage quantity ($gCO_2$) within the to-be-calculated time period (y) and is usually not considered.

In other embodiments, emission standards issued by a country or an international organization may also be used as the reference emission relationship. For example, in a scenario where the attribute is the transportation apparatus, vehicle emissions should meet the following phase III, IV, and V standards based on the regulations of "Limits and Measurement Methods for Exhaust Pollutants from Compression Ignition and Gas Fueled Positive Ignition Engines of Vehicles (III, IV, V)." The specific masses of carbon monoxide, total hydrocarbon compounds, nitrogen oxides and particulate matter measured by an ESC test, as well as the smoke opacity measured by an ELR test, should not exceed the values given in Table 1 below:

Table 1 Experimental limits of ESC and ELR

| Phase | Carbon monoxide (CO)/ [g/(kW · h)] | Hydrocarbon compound (HC)/ [g/(kW · h)] | Nitrogen oxide ($NO_x$)/ [g/(kW · h)] | Particulate matter (PM)/ [g/(kW · h)] | Smoke intensity/ $m^{-1}$ |
|---|---|---|---|---|---|
| III | 2.1 | 0.66 | 5.0 | 0.10 0.13[1] | 0.8 |
| IV | 1.5 | 0.46 | 3.5 | 0.02 | 0.5 |
| V | 1.5 | 0.46 | 2.0 | 0.02 | 0.5 |
| EEV | 1.5 | 0.25 | 2.0 | 0.02 | 0.15 |

ESC is European steady state cycle; ELR is European load response.

For a diesel engine requiring additional ETC tests and a gas engine requiring ETC tests, the specific masses of carbon monoxide, non-methane hydrocarbon compounds, methane (if applicable), nitrogen oxides and particulate matter (if applicable) should not exceed the values given in Table 2.

Table 2 Experimental limits of ETC

| Phase | Carbon monoxide (CO)/ [g/(kW · h)] | Hydrocarbon compound (NMHC)/ [g/(kW · h)] | Methane ($CH_4$)[1]/ [g/(kW · h)] | Nitrogen oxide ($NO_x$)/ [g/(kW · h)] | Particulate matter (PM)[2]/ [g/(kW · h)] |
|---|---|---|---|---|---|
| III | 5.45 | 0.78 | 1.6 | 5.0 | 016 0.21[3] |
| IV | 4.0 | 0.55 | 1.1 | 3.5 | 0.03 |
| V | 4.0 | 0.55 | 1.1 | 3.5 | 0.03 |
| EEV | 3.0 | 0.40 | 0.65 | 2.0 | 0.02 |
| (1) Only for NG engine. | | | | | |
| (2) Not applicable to gas engine in Phase III, Phase IV, and Phase V. | | | | | |
| (3) For engine with displacement per cylinder lower than $0.75dm^3$ and rated power speed higher than 3,000 r/min. | | | | | |

ETC means European transient cycle; NG engine means a natural gas engine; EEV means an enhanced environmentally friendly vehicle.

In this case, when calculating the reference emission (BE) and the actual emission (PE), various carbon compounds in emission components can be respectively converted into carbon dioxide $CO_2$ containing the same quantity of carbon, and a sum the corresponding $CO_2$ is calculated as PE and BE.

Similarly, the reference emission relationship can also be variable. For example, depending on the imbalance of development between domestic regions, emission standards of transportation apparatuses in different regions may be different. Some regions have already forced to use the national standard V, while some regions are still adopting the national standard IV. Business system 120 may choose to use different standards based on the region where the object is located. It can also be set similarly for the situation where the object is located abroad. In addition, as the level of social environmental protection increases, national or international emission standards may further rise to conditions not listed in the table. In this case, business system 120 may also adaptively adjust its reference emission relationship.

In the foregoing embodiment using the foregoing national or international standards as the reference emission relationship, a transportation apparatus manufacturer needs to test various emission indicators to obtain a production license before mass-production of a certain type of transportation apparatus. For each type of transportation apparatus, these measured indicators may be pre-stored in business system 120 or sent to business system 120 by a vehicle or a vehicle manufacturer each time it is used.

Therefore, for the calculation of the vehicle's carbon emission reduction, PE and BE may be calculated based on emission indicators of object 110 (i.e., the transportation apparatus) obtained by the test and $CO_2$ obtained by conversion of standards of the carbon emission components in Table 1 and/or Table 2 (such as carbon monoxide (CO), hydrocarbon compounds (HC), methane (CH4), non-methane hydrocarbon compounds (NMHC), etc.), thereby calculating the carbon emission reduction ER. It should be understood that when the carbon emission reduction is calculated using the standards in Table 1 and Table 2, the running time (that is, the to-be-calculated time period) and the average running power of a target vehicle to be tested should also be considered.

The above describes the method of how to obtain the reference emission and the actual emission in the scenario where object 110 is the transportation apparatus, so as to determine the carbon emission reduction equivalent. The first method mainly considers emission reduction from the perspective of energy consumption, while the second method mainly considers emission reduction from the perspective of waste emission.

Scenario 2: the scenario of the energy-saving home appliance:

In some embodiments, object 110 may be energy-saving home appliance 114. In this case, when the user uses energy-saving home appliance 114, the carbon emission reduction equivalent of the energy-saving home appliance may be determined. In addition, the carbon emission reduction equivalent may also be included in the user's carbon emission reduction as a part of a result of the user's total carbon emission reduction activity. In this scenario, business system 120 may determine the reference emission based on a reference emission relationship associated with the target smart contract, where the reference emission relationship is generated according to a predefined emission standard.

In an example, as shown in Table 3, the national energy efficiency index (for example, level one, level two, or level three, etc.) may be used as the reference emission relationship to calculate the reference emission. The national energy efficiency index may be expressed in the form of an energy efficiency ratio or in the form of power consumption per unit time.

Table 3 Reference emission relationship

| Reference emission relationship | Power consumption (degrees) |
|---|---|
| National standard level one energy consumption | 0.66 |
| National standard level three energy consumption | 0.9 |

Alternatively or additionally, a home appliance with similar attributes (such as one or more of washing machine capacity, motor speed, and rated output power) with current energy-saving home appliance 114 may be selected as a reference home appliance, so as to calculate the reference emission. In this way, corresponding carbon savings can be calculated even for energy-saving home appliances that have not been registered in business system 120.

In some embodiments, as mentioned above, business system 120 may also determine the actual emission based on the predetermined emission relationship related to the attributes of object 110; and then determine the carbon emission reduction equivalent based on both the reference emission and the actual emission. The predetermined emission relationship may be represented by any parameter that can reflect emission standards of different types of home appliances. Currently, the predetermined emission relationship usually includes at least the power consumption per unit time of object 110, but it is not limited to this.

In some embodiments, different types of home appliances may correspond to different predetermined emission relationships. For example, different predetermined emission relationships may be set for washing machines, air conditioners, and televisions. Optionally, different models of home appliances produced by different manufacturers under the same type may also correspond to different predetermined emission relationships. Even different operating modes of the same home appliance may correspond to different predetermined emission relationships. For example, for home appliances like washing machines, different models of different brands may have huge differences in carbon emission, even for emissions under different operating modes. Therefore, corresponding predetermined emission relationships may be configured for these different types, different models, or different operating modes, and correspondences between the home appliances and the predetermined emission relationship may be established and saved in business system 120 in advance.

Further, for a home appliance newly connected to business system 120, its emission parameters may also be compared with emission parameters of the same type of home appliances already stored in business system 120 to select the predetermined emission relationship of the home appliance with the closest emission parameter as the predetermined emission relationship of the newly involved home appliance.

In an example, the power consumption of a certain type of washing machine in a single operation in each operation mode may be as shown in Table 4.

Table 4

| Serial number | Operating mode | Power consumption (degrees) |
|---|---|---|
| 1 | all | 0.3385 |
| 2 | Standard procedure | 0.3588 |
| 3 | Mixed washing | 0.4335 |
| 4 | Quick washing | 0.1641 |
| 5 | Wool degreasing | 0.1616 |

Therefore, Table 3 and Table 4 may be combined to determine the reference emission and the actual emission when the washing machine is used, so as to determine the carbon emission reduction equivalent. For example, if the washing machine works in the standard procedure mode once, in the case that the level one energy consumption is used as the reference emission relationship, the electricity consumption each time it saves is 0.66-0.3588=0.3012 (degrees). Taking the carbon dioxide emission factor in North China in 2012 (0.8843 kgCO$_2$/degree) for calculation, the carbon emission reduction equivalent of this washing machine's work is 0.3012*0.8843=0.266 (kgCO$_2$).

Scenario 3: the scenario of the item recovery service:

In some embodiments, as mentioned above, object 110 may be recovered item 116. The recovered item may be, for example, a paper product, a plastic product, a glass product, a metal product, various home appliances, etc., but it is not limited thereto. In some embodiments, a reference emission is determined based on a reference emission relationship associated with the target smart contract. For the above-mentioned recovered item, its reference emission may be the carbon emission required to be consumed by assuming that the item is not recycled but is processed as garbage. For example, taking a recovered item i (such as polyterephthalate plastic (PET)) as an example, the carbon emission (BE) per kilogram of the item processed may be calculated by the following formula (7):

$$BE_{plastic,y} = \sum \left[ Q_{i,y} \times L_i \times B_i \times \left( SEC_{BL,i} \times EF_{el,y} + SFC_{BL,i} \times EF_{FF,CO2} \right) \right]$$

$$(7)$$

where $Q_{i,y}$ refers to the weight of the recovered item i, in kg (kilogram);

$L_i$ is a correction coefficient, used to correct the loss during the recovery of the item, and its value may be, for example, 0.75;
$B_i$ refers to a country-specific correction coefficient, which is used to distinguish the situation of different countries. For example, different country-specific correction coefficients may be set for a country in Annex I and a country not in Annex I in the "Kyoto Protocol." In one example, $B_i$ for China is set to 1;
$SEC_{BL,i}$ refers to the power consumption per ton of the item $i$, and its value is, for example, 1.11 MWh/t (megawatt hours/ton);
$EF_{el,y}$ represents a carbon dioxide emission factor within the to-be-calculated time period y. For example, the carbon dioxide emission factor in North China in 2012 was 0.8843 tCO$_2$/MWh (ton CO$_2$/megawatt hour); $SFC_{BL,i}$ refers to the fuel consumption for processing per ton of the item $i$, and its value is, for example, 15 GJ/t (Gigajoules/ton);
$EF_{FF,CO2}$ refers to an emission factor of the consumed fuel, and its value is, for example, 0.0675 tCO2/GJ (ton CO2/Gigajoules).

In some embodiments, the actual emission may also be determined based on a predetermined emission relationship related to the attribute of the object. Each type of recovered item may have a different predetermined emission relationship, and this predetermined emission relationship mainly indicates the carbon emission generated by the electricity and/or fuel consumed in the recovery process of the item. For example, different predetermined emission relationships may be set for items with different attributes, such as paper products, plastic products, glass products, metal products, various home appliances, and so on. For example, taking a recovered item type i (such as polyterephthalate plastic (PET)) as an example, the carbon emission (PE) per kilogram of the item recovered may be calculated as follows:

$$PE_{i,y} = \left(EC_{i,y} + SEC_{P,i}\right) * EF_{el,y} + \left(FC_{i,y} * NCV_{FF} * EF_{FF,CO2}\right)$$

$$(8)$$

where: $EF_{el,y}$ represents a carbon dioxide emission factor within the to-be-calculated time period y. For example, the carbon dioxide emission factor in North China in 2012 was 0.8843 tCO2/MWh (ton $CO_2$/megawatt hour) (i.e., 884.3 $kgCO_2$/MWh (kilogram $CO_2$/megawatt hour));

$EC_{i,y}$ refers to the power consumption of reprocessing the item i during the recovery process, and the unit may be, for example, MWh (megawatt hour);

$SEC_{p,i}$ refers to the electricity consumed by transportation vehicles during the recovery process. In a simplified calculation of the emission relationship, this item may not be included in the calculation, that is, its value is taken as 0.

$FC_{i,y}$ refers to the fuel consumption in the recovery process, and the unit may be, for example, t tons);

$NCV_{FF}$ refers to the net heating value of the consumed fuel, and its value is, for example, 0.04307GJ/t (Gigajoules/ton);

$EF_{FF,CO2}$ refers to an emission factor of the consumed fuel, and its value is, for example, 67.5 $kgCO_2$/GJ (kilogram $CO_2$/Gigajoules).

Therefore, the reference emission and the actual emission may be calculated respectively based on the above formulas, so as to determine the carbon emission reduction equivalent. For example, the carbon emission reduction may be calculated with reference to the above formula (6).

Scenario 4: the scenario of the item recycling service

Similar to item 116 in scenario 3, item 118 in scenario 4 may include paper products, plastic products, glass products, metal products, home appliances, etc. The main difference between item 116 and item 118 is that in scenario 3, after being recovered, item 116 is processed (such as destroyed), while in scenario 4, after being recovered, item 118 is recycled again (i.e., second-hand item).

In the following, taking as an example that a book is recycled (second-hand book), in this case, it is determined that the attribute of item 118 (that is, the book) is a paper product. Therefore, it can be determined that the reference emission of the paper product is:

$$BE_y = EF_{BL,i} * Q_{i,y}$$

$$(9)$$

where $Q_{i,y}$ refers to the weight of the recycled paper product, and the unit is kg (kilogram);

$EF_{BL,i}$ refers to the emission generated by per kilogram of paper products processed (according to an original processing method), and its value is, for example, 0.1 $kgCO_2$ per kilogram of paper products.

Optionally, the actual emission PE in this scenario may be approximately regarded as 0. Therefore, the carbon emission reduction of item recycling may be calculated by the following formula to determine the carbon emission reduction equivalent:

$$ER=BE-PE=BE$$

$$(10)$$

At 230, business system 120 sends the carbon emission reduction equivalent to node 140 of blockchain platform 130 to store the carbon emission reduction equivalent in a first account associated with a corporate user on blockchain platform 130.

In some embodiments, the carbon emission reduction equivalent may be transmitted to blockchain platform 130 to be stored in the first account associated with the corporate user, which may be associated with multiple objects 110. In some embodiments, the corporate user is, for example, a producer of transportation apparatus 112 (such as a new energy vehicle) and/or energy-saving home appliance 114, and/or a provider of services such as recovery of item 116 and recycling of item 118. By storing all carbon emission reduction equivalents generated by individual users using various carbon-saving products and/or carbon-saving services provided by corporate users in the corporate user's account, it is convenient for the corporate users and the individual users to aggregate all carbon emission reduction equivalents to facilitate third-party certification, carbon currency exchange, or other carbon transactions based on the aggregated carbon emission reduction equivalents.

In some embodiments, transmitting the carbon emission reduction equivalent to blockchain platform 130 may also include determining that at least one of "a preset time interval is reached" and "the data volume of the obtained identification data and carbon activity data exceeds a predetermined value" is met; and when at least one of the two is met, the determined carbon emission reduction equivalent is packaged for transmission to node 140 of blockchain platform 130.

Regarding transmitting original identification data and carbon activity data to blockchain platform 130, in some embodiments, it is determined whether at least one of "a preset time interval is reached" and "the data volume of the obtained identification data and carbon activity data exceeds a predetermined value" is met; and when at least one of the two is met, the obtained original identification data and carbon activity data are packaged for transmission to a distributed storage apparatus; and the hash values of the identification data and the carbon activity data are calculated and packaged for transmission to blockchain platform 130. By setting the above-mentioned "preset time interval" or "predetermined value of data volume," when the preset time interval is reached and/or the obtained data volume exceeds the predetermined value, "the original identification data and carbon activity data obtained in real time from the network and the data of the carbon emission reduction equivalent determined via the smart contract" are packaged and transmitted to the blockchain, instead of uploading the above data to the chain in real time, thereby significantly saving the computing power and cost of the blockchain.

In some embodiments, when the preset time interval is set, consideration is given to effective saving in blockchain computing power and cost and good user experience. For example, it may be set to 24 or 12 hours, or other suitable time.

Optionally, in order to further save the computing power and cost of the blockchain, the original identification data and carbon activity data obtained in real time from the network are packaged and stored on the distributed storage apparatus (for example, stored on a back-end database and maintained by the third party). Then, the hash values of the obtained original identification data and carbon activity data are calculated, and the hash values are packaged to send to blockchain platform 130 for storage. In some embodiments, if the volume of the identification data and carbon activity data obtained in real time from the network is small, whether the volume of the identification data and carbon activity data reaches or exceeds a preset value may also be determined. When it is determined that the preset value is reached or exceeded, the hash values of the identification data and carbon activity data are transmitted to blockchain platform 130 for storage.

Optionally, blockchain platform 130 may publish carbon trading associated with the carbon emission reduction equivalent in the first account as a blockchain transaction. By publishing carbon trading data as the blockchain transaction, data in the carbon trading process can be agreed and cannot be tampered with, thereby solving the problem of opaque and inaccurate carbon emission reduction data in traditional carbon trading methods.

Optionally or additionally, method 200 for processing carbon emission reduction data may further include: a database type for storing data is set based on characteristics of data to be transmitted to blockchain platform 130, the database type including at least one of the following: a database of a basic information type configured to store data that will not be updated once stored, a database of a tracking information type configured to store data that need to be updated multiple times, and a database of an ownership information type configured to store data involving ownerships and a change process thereof. In some embodiments, method 200 for processing carbon emission reduction data further includes: corresponding access modes and authorities of the databases are determined based on the set database type.

Further, method 200 also includes a process of converting the user's carbon emission reduction equivalent into points. Depending on whether the user's carbon emission reduction activity has been certified by a third-party authority, there may be different implementations for converting the user's carbon emission reduction equivalent into points.

On the one hand, for carbon emission reduction activities certified by a third-party authority (such as Det Norske Veritas DNV-GL, etc.), the original data of the carbon emission reduction activity are considered authentic and credible by entire system 100, so directly converting the data into the points recognized by the entire blockchain network and capable of being circulated has higher credibility. It can be understood that since such points can be recognized in entire system 100, they can be used as digital currency in system 100 for circulation, such as transfer, payment, and so on.

On the other hand, for carbon emission reduction activities that have not been certified by a third-party authority, in order to attract users to actively participate in the energy-saving application, users should also be rewarded for their participation, that is, points only recognized in business system 120 are generated for the users.

Therefore, optionally, depending on whether the original data are directly obtained from a data source (i.e., the transportation apparatus, a personal user terminal using the transportation apparatus, etc.) or obtained via a third-party certification body in method 200, there are two ways to convert carbon savings into points. For the original data that have been certified by the third-party certification body, the carbon savings may be converted into a first point (i.e., carbon currency), and the first point may be stored on the blockchain in association with the user's ID or account, or may also be stored in association with identifiers of tools (for example, the transportation apparatus) or services (for example, the item recovery service). For original data that have not been certified by the third-party certification body (for example, data directly obtained from the data source), the carbon savings determined through these original data will be converted into a second point, and the second point is stored in business system 120 in association with the user's ID or account, or may also be stored in association with the identifiers of the tools or services.

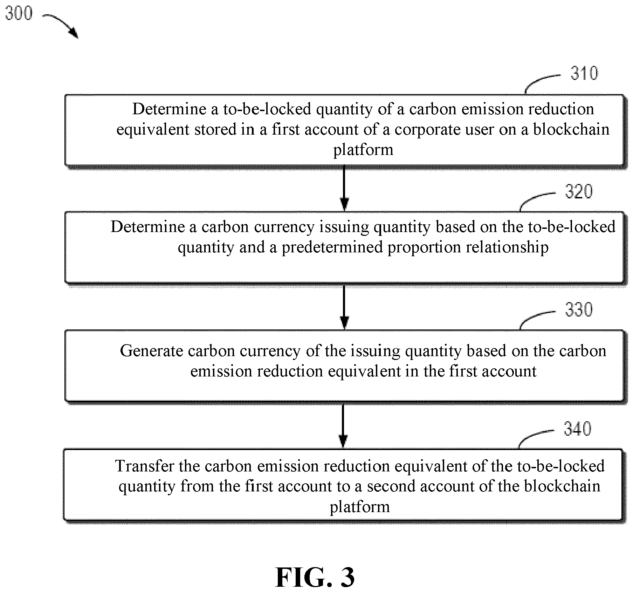

Since the above-mentioned first point (i.e., carbon currency) has the function of circulating as digital currency in entire system 100, the solution of the present disclosure also includes methods such as issuance, distribution, circulation, currency charging, and cancellation of carbon currency. The carbon currency is a value certificate that can be used in entire system 100 (including blockchain platform 130). Based on the guarantee of the underlying technology of the blockchain, the carbon currency can be exchanged and transferred on blockchain platform 130 at a low cost, which improves the efficiency of value transfer of carbon emission reduction resources. The following describes flow charts of methods of carbon currency issuance, cancellation and exchange according to the embodiments of the present disclosure in conjunction with FIGS. 3 to 5. Those skilled in the art can understand that the methods described in conjunction with FIGS. 3 to 5 may be implemented as a part of the method in FIG. 2 or may be implemented as separate methods.

FIG. 3 shows a flow chart of carbon currency issuing method 300 according to the embodiments of the present disclosure. In FIG. 3, each action is executed by a processor of business system 120 and/or blockchain platform 130, for example. Method 300 may further include an additional action that is not shown and/or may omit an action that is shown. The scope of the present disclosure is not limited in this regard.

At 310, when business system 120 receives a carbon currency issuing request from the corporate user, a to-be-locked quantity of the carbon emission reduction equivalent stored in the first account of the corporate user on blockchain platform 130 is determined first. The carbon emission reduction equivalent is from a carbon emission reduction activity of at least one object 110 of the corporate user.

In some embodiments, when business system 120 receives a carbon currency issuing request from the corporate user, the to-be-locked quantity of carbon emission reduction certificates or carbon emission reduction equivalents in the first account of the corporate user may be obtained. In some embodiments, the first account is, for example, a blockchain account of the corporate user who has adopted carbon emission reduction activities, and, for example, under audit by a third-party certification body, the corporate user obtains a certain quantity of carbon emission reduction certificates (for example, CCER) by taking the carbon emission reduction activities (for example, by producing new energy vehicles, producing energy-saving home appliances, or providing item recovery or item recycling services), and transfers them into the first account associated with the corporate user on blockchain platform 130. Specifically, on blockchain platform 130, the carbon emission reduction certificate of the corporate user can be recorded under a carbon currency wallet address thereof.

In order to ensure the stability of the value of the carbon currency and avoid the repeated use of carbon emission reduction equivalents or emission reduction certificates that have been used for peer-to-peer issuance of the carbon currency by speculators, in carbon currency issuing method 300, the "carbon emission reduction equivalents or emission reduction certificates" used for peer-to-peer issuance of the carbon currency need to be locked. The to-be-locked quantity is derived, for example, from a value input by the corporate user for issuing the carbon currency. In some embodiments, the to-be-locked quantity may be equal to or less than the total quantity of carbon emission reduction certificates or carbon emission reduction equivalents in the first account, which enables the corporate user to require to issue the carbon currency based on all or part of the carbon emission reduction certificates or carbon emission reduction equivalents in the account.

In some embodiments, when the carbon currency issuing request from the corporate user is received, whether the carbon emission reduction certificates or carbon emission reduction equivalents in the first account of the corporate user have been certified by the third-party certification body is determined first; and when it is determined that they have been certified by the third-party certification body, the to-be-locked quantity of the carbon emission reduction certificates or carbon emission reduction equivalents in the first account of the corporate user is obtained. By using the above measures, the relevant data have been audited and verified by the third-party certification body at the beginning of the corporate user's request for the issuance of the carbon currency.

At 320, a carbon currency issuing quantity is determined based on the to-be-locked quantity and a first predetermined proportion relationship. In some embodiments, it may include determining the carbon currency issuing quantity based on the first predetermined proportion relationship and the to-be-locked quantity of the carbon emission reduction certificates or carbon emission reduction equivalents.

Regarding the first predetermined proportion relationship, in some embodiments, when the carbon currency issuing request of the corporate user is detected, the first predetermined proportion relationship is determined based on the total quantity of carbon currency currently existing on blockchain platform 130 and the total locked quantity of the carbon emission reduction certificates or carbon emission reduction equivalents in the second account. For example, the second account is verified and locked by a third-party certification body. By using the above measures, it is possible to issue the carbon currency based on the total quantity of the carbon emission reduction certificates or carbon emission reduction equivalents verified and locked by the third-party certification body and the first predetermined proportion relationship, which can ensure that the value of the carbon currency is relatively stable and issuance is normative.

At 330, the carbon currency of the issuing quantity is generated based on the carbon emission reduction equivalent in the first account.

Specifically, the carbon currency of the issuing quantity may be generated via a second smart contract and stored in the first account. In some embodiments, the second smart contract is signed by a private key of the third-party certification body (for example, Det Norske Veritas DNV-GL). In some embodiments, the third-party certification body is responsible for auditing and verifying the smart contracts involved in carbon currency issuance to cancellation, and the process of carbon currency exchange and circulation by corporate users, so as to ensure the authority, normativity and compliance of carbon currency issuance. In some embodiments, the third-party certification body is also responsible for auditing and verifying application interfaces of blockchain platform 130 and various objects or services, and certifying and checking the ID of the objects (for example, the transportation apparatus), the original carbon activity data obtained, and the determined carbon emission reduction equivalents, etc.

At 340, the carbon emission reduction equivalent of the to-be-locked quantity is transferred from the first account to a second account of blockchain platform 130. Specifically, the carbon emission reduction certificates or carbon emission reduction equivalents of the to-be-locked quantity may be transferred from the first account to the second account. In some embodiments, after corresponding issuance is completed, the carbon emission reduction certificates or carbon emission reduction equivalents of the to-be-locked quantity are transferred to the second account that is audited, checked, and locked by the third-party certification body.

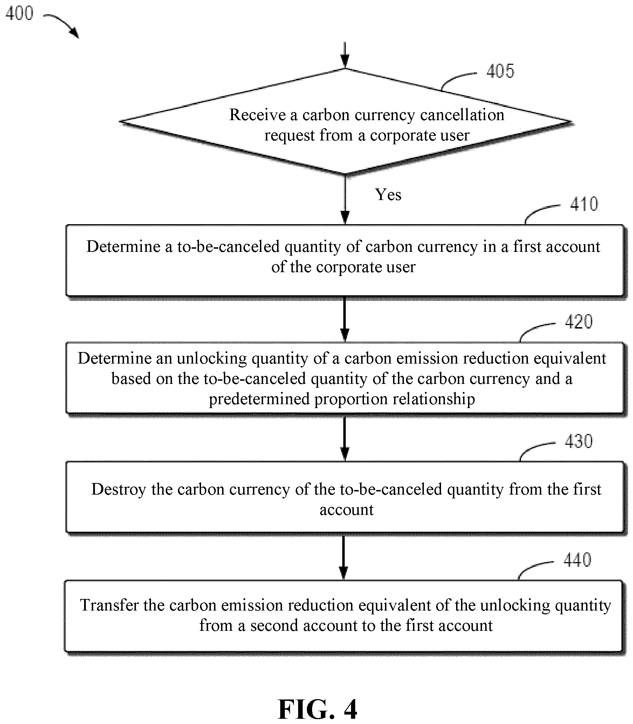

FIG. 4 shows a flow chart of carbon currency cancellation method 400 according to the embodiments of the present disclosure. In FIG. 4, each action is executed by a processor of business system 120 and/or blockchain platform 130, for example. It should be understood that method 400 may further include an additional action that is not shown and/or may omit an action that is shown. The scope of the present disclosure is not limited in this regard.

At 405, whether a carbon currency cancellation request from a corporate user is received is judged. When the carbon currency cancellation request is received, a to-be-canceled quantity of carbon currency in the first account of the corporate user is determined at 410. Specifically, whether the carbon currency cancellation request of the corporate user is received may be judged, and when the carbon currency cancellation request is received, the to-be-canceled quantity of the carbon currency in the first account of the corporate user is obtained. In some embodiments, when the carbon currency cancellation request of the corporate user is received, a carbon currency wallet address associated with the first account and the to-be-canceled quantity of the carbon currency are obtained. In some embodiments, the to-be-canceled quantity of the carbon currency may be equal to or less than the total quantity of the carbon currency in the first account. This allows the corporate user to cancel all or part of the carbon currency in the account thereof to exchange for corresponding carbon emission reduction certificates or carbon emission reduction equivalents, or exchange for any other physical or virtual items in system 100. In some embodiments, when the carbon currency cancellation request of the corporate user is received, whether the carbon currency in the first account of the corporate user has been certified by the third-party certification body is determined; and when it is determined that it has been certified by the third-party certification body, the to-be-canceled quantity of the carbon currency in the first account is obtained. As a result, relevant data have been audited and verified by the third-party certification body at the beginning of carbon currency cancellation of the corporate user.

At 420, an unlocking quantity of the carbon emission reduction equivalent is determined based on the to-be-canceled quantity of the carbon currency and a second predetermined proportion relationship. Specifically, the unlocking quantity of the carbon emission reduction certificates or carbon emission reduction equivalents may be determined based on the second predetermined proportion relationship and the to-be-canceled quantity of the carbon currency.

Regarding the second predetermined proportion relationship, in some embodiments, when the carbon currency cancellation request of the corporate user is detected, the second predetermined proportion relationship is determined based on the total quantity of the user's carbon currency currently recorded on blockchain platform 130 and the total locked quantity of the carbon emission reduction certificates or carbon emission reduction equivalents in the second account. It should be understood that the first predetermined proportion relationship and the second predetermined proportion relationship mentioned above may be the same or different, and are not limited herein.

At 430, the carbon currency of the to-be-canceled quantity is destroyed from the first account. Specifically, the carbon currency of the to-be-canceled quantity may be deleted from the first account via a third smart contract. In some embodiments, the third smart contract is signed by a private key of the third-party certification body.

At 440, the carbon emission reduction equivalent of the unlocked quantity is transferred from the second account to the first account. Specifically, the carbon emission reduction certificates or carbon emission reduction equivalents of the unlocked quantity may be transferred from the second account to the first account. In some embodiments, in the first account, the unlocked carbon emission reduction certificates or carbon emission reduction equivalents may continue to be used for subsequent issuance of carbon currency.

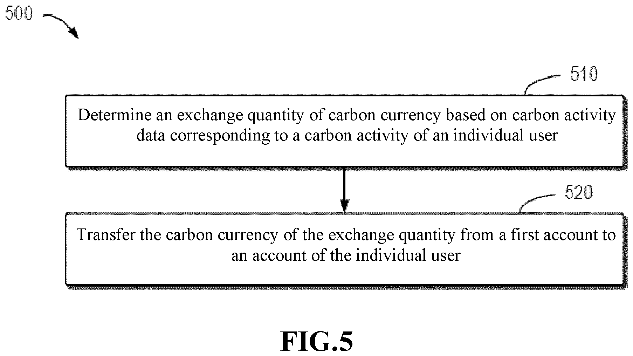

FIG. 5 shows a flow chart of method 500 for issuing carbon currency to an individual according to the embodiments of the present disclosure. In FIG. 5, each action is executed by a processor of business system 120 and/or blockchain platform 130, for example. Method 500 may further include an additional action that is not shown and/or may omit an action that is shown. The scope of the present disclosure is not limited in this regard.

At 510, whether a carbon currency issuing request of an individual user related to object 110 carrying out a carbon emission reduction activity is received is judged, and when the carbon currency issuing request is received, an exchange quantity of the carbon currency is determined based on carbon activity data corresponding to the carbon activity of the individual user.

For example, whether the carbon currency issuing request of the individual user related to transportation apparatus 112 is received is judged. When the carbon currency issuing request is received, an issuing quantity of the carbon currency is determined based on the carbon activity data of transportation apparatus 112. In some embodiments, the first account belongs to, for example, a new energy vehicle manufacturer or a service provider corporate of new energy vehicle sharing. The individual user related to transportation apparatus 112 is, for example, a purchaser of a new energy vehicle or a user of a shared new energy vehicle. In some embodiments, the first account may also belong to a corporate user that produces energy-saving home appliance 114, a corporate user that provides item recovery or recycling services, and so on. The individual user related to object 110 may be, for example, an individual user who uses energy-saving home appliance 114 or an individual user who sends items to a recycling bin.

At 520, the carbon currency of the exchange quantity is transferred from the first account to an account of the individual user. The first account may be associated with accounts of a plurality of individual users including the individual user. For example, the association may be performed when the individual user purchases or registers transportation apparatus 112 of the corporate user and energy-saving home appliance 114, or registers with the corporate user that provides the item recovery service.

In some embodiments, based on the method mentioned above, after a certain quantity of carbon emission reduction equivalents or carbon emission reduction certificates in the first account of the corporate user are converted into the corresponding quantity of carbon currency, according to the carbon activity data of the individual user associated with the first account in the process of using the new energy vehicle, the corresponding quantity of carbon currency is exchanged as rewards to be issued to the associated account of the individual user (i.e., the account hosted by the individual user in a corporate account system). In some embodiments, the individual user may view and copy the address of a personal wallet, and bind the address of the personal carbon currency wallet in the corporate account system; the individual user initiates the carbon currency issuing request, and the corporate user's system receives and verifies the carbon currency issuing request and then determines the carbon currency issuing quantity; and then the corresponding issuing quantity of carbon currency in the corporate carbon currency wallet is transferred to the address of the carbon currency wallet of the individual user, and the individual user may confirm the quantity of the received carbon currency in the personal wallet. The record of the issuance process is stored on the blockchain.

Alternatively, the carbon currency obtained by the corporate user or the individual user may be circulated on blockchain platform 130 and exchanged for services or merchandises of the equivalent value, for example, the services or merchandises of the equivalent value are exchanged through a blockchain chain store module on blockchain platform 130. By using the above measures, the carbon currency is issued from the corporate wallet to the individual wallet hosted by the individual user in the corporate, thus making the individual user and the corporate more active in participating in carbon emission reduction activities and projects.

In some embodiments, the carbon currency in the user's personal wallet may also be recharged to the personal account associated with the first account of the corporate. For example, the individual user initiates a currency recharging request, the corporate user creates a unique currency recharging address for the individual user, and the individual user may view and copy own currency recharging address in the system; the individual user initiates personal wallet transfer to the currency recharging address, and the corporate user monitors the currency recharging address of the individual user, confirms the success of the transaction, and increases the carbon currency in the personal account of the individual user associated with the corporate user's system; and the individual user may view own currency recharging history in the corporate user's system.

The above describes the operation process using the corporate user as the carbon currency issuance object with reference to FIGS. 3 to 5. The corporate user who has obtained the carbon currency may also transfer the corresponding quantity of carbon currency to the individual user who actually uses the corresponding carbon-saving products or services. This not only ensures that both the corporate and the individual can benefit, but also ensures that the same emission reduction activity will not be double-calculated in system 100. However, those skilled in the art can understand that the present invention can also be implemented in other forms. For example, the individual user may be used as the carbon currency issuance object, the carbon emission reduction activities of the individual user using various carbon emission reduction products or services are converted into the carbon currency, and the corresponding quantity of carbon currency is transferred to the corporate user who produces the corresponding products or provides the corresponding services subsequently depending on the situations.

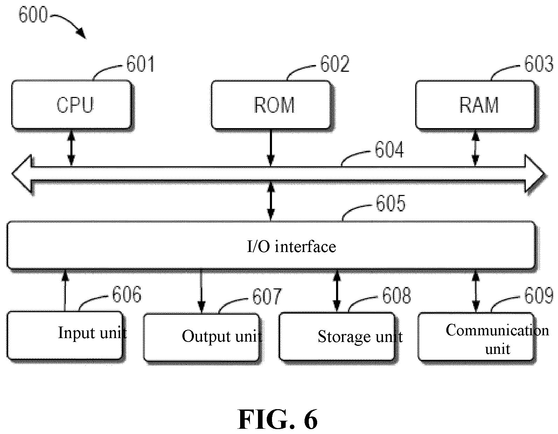

FIG. 6 schematically shows a block diagram of electronic apparatus 600 for processing carbon emission reduction data suitable for implementing the embodiments of the present disclosure. Apparatus 600 may be configured to implement one or more hosts in business system 120 and/or node 140 in blockchain platform 130 in FIG. 1. As shown in the figure, apparatus 600 includes central processing unit (CPU) 601 which may perform various proper actions and processing according to computer program instructions stored in read only memory (ROM) 602 or computer program instructions loaded from storage unit 608 to random access memory (RAM) 603. RAM 603 may also store various programs and data necessary for operations of apparatus 600. CPU 601, ROM 602, and RAM 603 are connected to each other through bus 604. Input/output (I/O) interface 605 is further connected to bus 604.

A plurality of components in apparatus 600 are connected to I/O interface 605, including: input unit 606, such as a keyboard and a mouse; output unit 607, such as various types of displays and speakers; storage unit 608, such as a magnetic disk and an optical disk; and communication unit 609, such as a network card, a modem and a wireless communication transceiver. Communication unit 609 allows apparatus 600 to exchange information/data with other apparatuses via a computer network, such as the Internet, and/or various telecommunication networks.

Processing unit 601 executes the various methods and processing described above, for example, executes methods 200, 300, 400, and 500 for controlling data backup. For example, in some embodiments, methods 200, 300, 400, and 500 may be implemented as a computer software program that is stored in a machine-readable medium, such as storage unit 608. In some embodiments, part or all of the computer program may be loaded and/or installed onto apparatus 600 via ROM 602 and/or communication unit 609. When the computer program is loaded into RAM 603 and executed by CPU 601, one or more operations of methods 200, 300, 400 and 500 described above may be executed. Alternatively, in other embodiments, CPU 601 may be configured to perform one or more actions of methods 200, 300, 500 and 600 in any other suitable manner (for example, by means of firmware).

The present disclosure may be a method, an apparatus, and/or a computer-readable storage medium, with computer-readable program instructions for performing various aspects of the present disclosure loaded thereon.

The computer-readable storage medium may be a tangible apparatus that may hold and store instructions used by an instruction-executing apparatus. For example, the computer-readable storage medium may be, but is not limited to, an electric storage apparatus, a magnetic storage apparatus, an optical storage apparatus, an electromagnetic storage apparatus, a semiconductor storage apparatus, or any suitable combination of the foregoing. More specific examples (a non-exhaustive list) of the computer-readable storage medium include: a portable computer disk, a hard disk, a random access memory (RAM), a read-only memory (ROM), an erasable programmable read-only memory (EPROM or flash memory), a static random access memory (SRAM), a portable compact disk read-only memory (CD-ROM), a digital versatile disk (DVD), a memory stick, a floppy disk, a mechanical encoding apparatus such as a punch card or a protruding structure in a groove with instructions stored thereon, and any suitable combination of the foregoing. The computer-readable storage medium used herein is not to be interpreted as transient signals per se, such as radio waves or other freely propagating electromagnetic waves, electromagnetic waves propagating through waveguides or other transmission media (e.g., light pulses through fiber-optic cables), or electrical signals transmitted through electrical wires.

The computer-readable program instructions described herein may be downloaded from a computer-readable storage medium to various computing/processing apparatuses or downloaded to an external computer or external storage apparatus via a network, such as the Internet, a local area network, a wide area network, and/or a wireless network. The network may include copper transmission cables, fiber optic transmission, wireless transmission, routers, firewalls, switches, gateway computers, and/or edge servers. A network adapter card or network interface in each computing/processing apparatus receives computer-readable program instructions from a network and forwards the computer-readable program instructions for storage in a computer-readable storage medium in each computing/processing apparatus.

The computer program instructions for executing the operation of the present disclosure may be assembly instructions, instruction set architecture (ISA) instructions, machine instructions, machine-dependent instructions, microcode, firmware instructions, status setting data, or source code or object code written in any combination of one or more programming languages, the programming languages including object-oriented programming language such as Smalltalk and C++, and conventional procedural programming languages such as the C language or similar programming languages. The computer-readable program instructions may be executed entirely on a user computer, partly on a user computer, as a stand-alone software package, partly on a user computer and partly on a remote computer, or entirely on a remote computer or a server. In a case where a remote computer is involved, the remote computer can be connected to a user computer through any kind of networks, including a local area network (LAN) or a wide area network (WAN), or can be connected to an external computer (for example, connected through the Internet using an Internet service provider). In some embodiments, an electronic circuit, such as a programmable logic circuit, a field programmable gate array (FPGA), or a programmable logic array (PLA), is customized by utilizing status information of the computer-readable program instructions. The electronic circuit may execute the computer-readable program instructions to implement various aspects of the present disclosure.

Various aspects of the present disclosure are described here with reference to flow charts and/or block diagrams of the method, the apparatus, and the computer-readable storage medium according to the embodiments of the present disclosure. It should be understood that each block of the flow charts and/or the block diagrams and combinations of blocks in the flow charts and/or the block diagrams may be implemented by computer-readable program instructions.

These computer-readable program instructions may be provided to a processor of a generalpurpose computer, a special-purpose computer, or a further programmable data processing device, thereby producing a machine, such that these instructions, when executed by the processor of the computer or the further programmable data processing device, produce a device for implementing functions/actions specified in one or more blocks in the flow charts and/or block diagrams. These computer-readable program instructions may also be stored in a computer-readable storage medium, and these instructions cause a computer, a programmable data processing device, and/or other apparatuses to operate in a specific manner; and thus the computer-readable medium having instructions stored includes an article of manufacture that includes instructions that implement various aspects of the functions/actions specified in one or more blocks in the flow charts and/or block diagrams.

The computer-readable program instructions may also be loaded to a computer, a further programmable data processing device, or a further apparatus, so that a series of operating steps may be performed on the computer, the further programmable data processing device, or the further apparatus to produce a computer-implemented process, such that the instructions executed on the computer, the further programmable data processing device, or the further apparatus may implement the functions/actions specified in one or more blocks in the flow charts and/or block diagrams.

The flow charts and block diagrams in the drawings illustrate the architectures, functions, and operations of possible implementations of the method, the apparatus, and the computer-readable storage medium according to various embodiments of the present disclosure. In this regard, each block in the flow charts or block diagrams may represent a module, a program segment, or part of an instruction, the module, program segment, or part of an instruction including one or more executable instructions for implementing specified logical functions. In some alternative implementations, functions marked in the blocks may also occur in an order different from that marked in the accompanying drawings. For example, two successive blocks may actually be executed in parallel substantially, and sometimes they may also be executed in an inverse order, which depends on involved functions. It should be further noted that each block in the block diagrams and/or flow charts as well as a combination of blocks in the block diagrams and/or flow charts may be implemented using a special hardware-based system that executes specified functions or actions, or implemented using a combination of special hardware and computer instructions.

The embodiments of the present disclosure have been described above. The above description is illustrative, rather than exhaustive, and is not limited to the disclosed various embodiments. Numerous modifications and alterations are apparent to those of ordinary skill in the art without departing from the scope and spirit of the illustrated embodiments. The selection of terms used herein is intended to best explain the principles and practical applications of the various embodiments or the improvements to technologies on the market, or to enable other persons of ordinary skill in the art to understand the embodiments disclosed here.

The foregoing descriptions are only optional embodiments of the present disclosure and are not used to limit the present disclosure. For those skilled in the art, the present disclosure can have various modifications and changes. Any modification, equivalent replacement, improvement, etc. made within the spirit and principle of the present disclosure should be included in the scope of protection of the present disclosure.

**Claims**

1. A method for processing carbon emission reduction data, comprising:

    determining a target smart contract matching an attribute of an object carrying out a carbon emission reduction activity;
    determining a carbon emission reduction equivalent corresponding to the object based on the target smart contract and carbon activity data corresponding to the carbon emission reduction activity; and
    sending the carbon emission reduction equivalent to a node of a blockchain platform to store the carbon emission reduction equivalent in a first account associated with a corporate user on the blockchain platform.

2. The method according to claim 1, wherein determining the carbon emission reduction equivalent comprises:

    determining a reference emission based on a reference emission relationship associated with the target smart contract; and

determining the carbon emission reduction equivalent at least based on the reference emission.

3. The method according to claim 2, wherein the reference emission relationship is generated according to a predefined emission standard.

4. The method according to claim 2, wherein determining the carbon emission reduction equivalent at least based on the reference emission comprises:

   determining an actual emission based on a predetermined emission relationship related to the attribute of the object; and
   determining the carbon emission reduction equivalent based on the reference emission and the actual emission.

5. The method according to claim 1, wherein the object carrying out the carbon emission reduction activity comprises at least one of the following items:

   a transportation apparatus,
   an energy-saving home appliance,
   a recovered item, and
   a recycled item.

6. The method according to claim 1, wherein the attribute of the object comprises at least one of the following items:

   a type of a transportation apparatus,
   a model of a transportation apparatus,
   a model of a smart home appliance,
   an operating mode of a smart home appliance,
   a type of a recovered item, and
   a type of a recycled item.

7. The method according to claim 1, wherein determining the target smart contract comprises:
   determining a candidate smart contract matching the object as the target smart contract based on a correspondence between the candidate smart contract and a keyword, wherein the keyword corresponds to an attribute or a combination of a plurality of attributes of the object.

8. The method according to claim 1, further comprising:

   in response to receiving a carbon currency issuing request from the corporate user, determining a to-be-locked quantity of the carbon emission reduction equivalent stored in the first account of the corporate user on the blockchain platform, wherein the carbon emission reduction equivalent is from a carbon emission reduction activity of at least one object of the corporate user;
   determining a carbon currency issuing quantity based on the to-be-locked quantity and a first predetermined proportion relationship;
   generating carbon currency of the issuing quantity based on the carbon emission reduction equivalent in the first account; and
   transferring the carbon emission reduction equivalent of the to-be-locked quantity from the first account to a second account of the blockchain platform.

9. The method according to claim 1, further comprising:

   in response to receiving a carbon currency cancellation request from the corporate user, determining a to-be-canceled quantity of carbon currency in the first account of the corporate user;
   determining an unlocking quantity of the carbon emission reduction equivalent based on the to-be-canceled quantity of the carbon currency and a second predetermined proportion relationship;
   destroying the carbon currency of the to-be-canceled quantity from the first account; and
   transferring the carbon emission reduction equivalent of the unlocked quantity from a second account to the first account.

10. The method according to any of claims 8 and 9, further comprising:

determining the first predetermined proportion relationship and the second predetermined proportion relationship based on a total quantity of the carbon currency and the carbon emission reduction equivalent in the second account.

11. The method according to any of claims 8 and 9, further comprising:

in response to a carbon currency issuing request of an individual user related to the object carrying out the carbon emission reduction activity, determining an exchange quantity of the carbon currency based on carbon activity data corresponding to the carbon activity of the individual user; and

transferring the carbon currency of the exchange quantity from the first account to an account of the individual user, wherein the first account is associated with accounts of a plurality of individual users comprising the individual user.

12. An electronic apparatus for processing carbon emission reduction data, comprising:

one or more processors; and

a storage device configured to store one or more programs, wherein the one or more programs, when executed by the one or more processors, cause the one or more processors to implement the method according to any of claims 1-11.

13. A computer readable storage medium storing a computer program thereon, wherein the program, when executed by a processor, implements the method according to any of claims 1-11.

100 —

110 —

114

116

118

112

112-1

113-2

112-3   119   113-1   112-2   117

1162

1182

120

150

Carbon emission
reduction equivalent

130

140-3   142   140-2   140-1

142

144   144

# FIG. 1

*200*

```
                                                              — 210

┌────────────────────────────────────────────────────────────────┐
│                                                                  │
│     Determine a target smart contract matching an attribute      │
│     of an object carrying out a carbon emission reduction        │
│                          activity                                │
│                                                                  │
└────────────────────────────────────────────────────────────────┘
                               │
                               │                    — 220
                               ▼
┌────────────────────────────────────────────────────────────────┐
│                                                                  │
│   Determine a carbon emission reduction equivalent               │
│   corresponding to the object based on the target smart          │
│   contract and carbon activity data corresponding to the         │
│             carbon emission reduction activity                   │
│                                                                  │
└────────────────────────────────────────────────────────────────┘
                               │
                               │                    — 230
                               ▼
┌────────────────────────────────────────────────────────────────┐
│                                                                  │
│   Send the carbon emission reduction equivalent to a node of a   │
│   blockchain platform to store the carbon emission reduction     │
│   equivalent in a first account associated with a corporate      │
│             user on the blockchain platform                      │
│                                                                  │
└────────────────────────────────────────────────────────────────┘
```

**FIG. 2**

300

310

Determine a to-be-locked quantity of a carbon emission reduction equivalent stored in a first account of a corporate user on a blockchain platform

320

Determine a carbon currency issuing quantity based on the to-be-locked quantity and a predetermined proportion relationship

330

Generate carbon currency of the issuing quantity based on the carbon emission reduction equivalent in the first account

340

Transfer the carbon emission reduction equivalent of the to-be-locked quantity from the first account to a second account of the blockchain platform

**FIG. 3**

400

405

Receive a carbon currency cancellation
request from a corporate user

Yes

410

Determine a to-be-canceled quantity of carbon currency in a first account
of the corporate user

420

Determine an unlocking quantity of a carbon emission reduction equivalent
based on the to-be-canceled quantity of the carbon currency and a
predetermined proportion relationship

430

Destroy the carbon currency of the to-be-canceled quantity from the first
account

440

Transfer the carbon emission reduction equivalent of the unlocking quantity
from a second account to the first account

# FIG. 4

500

510

Determine an exchange quantity of carbon currency based on carbon activity data corresponding to a carbon activity of an individual user

520

Transfer the carbon currency of the exchange quantity from a first account to an account of the individual user

**FIG.5**

**FIG. 6**

## INTERNATIONAL SEARCH REPORT

| | |
|---|---|
| International application No. | |
| **PCT/CN2020/100598** | |

### A. CLASSIFICATION OF SUBJECT MATTER

G06Q 40/04(2012.01)i

According to International Patent Classification (IPC) or to both national classification and IPC

### B. FIELDS SEARCHED

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNKI, CNPAT, WPI, EPODOC, GOOGLE, IEEE: 碳, 排放, 减排, 区块链, 用户, 账号, 账户, 币, 发行, 注销, 兑换, 交易, reduce, carbon, block chain, energy, save, consumption, replace

### C. DOCUMENTS CONSIDERED TO BE RELEVANT

| Category* | Citation of document, with indication, where appropriate, of the relevant passages | Relevant to claim No. |
|---|---|---|
| X | CN 109118090 A (BEIJING YUANLIAN TECHNOLOGY CO., LTD.) 01 January 2019 (2019-01-01) description, paragraphs [0013]-[0027] | 1-7, 12-13 |
| Y | CN 109118090 A (BEIJING YUANLIAN TECHNOLOGY CO., LTD.) 01 January 2019 (2019-01-01) description, paragraphs [0013]-[0027] | 8-11 |
| Y | CN 104766237 A (CHAOYUE LIANCHUANG ENVIRONMENT INVESTMENT CONSULTATION (BEIJING) CO., LTD.) 08 July 2015 (2015-07-08) description, paragraphs [0032]-[0057], and figures 1-2 | 8-11 |
| A | CN 108615192 A (HEPU TECHNOLOGY DEVELOPMENT (BEIJING) CO., LTD.) 02 October 2018 (2018-10-02) entire document | 1-13 |
| A | US 8527335 B1 (MACARTHUR, Rorbert S.) 03 September 2013 (2013-09-03) entire document | 1-13 |

☐ Further documents are listed in the continuation of Box C.　　☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **03 September 2020** | **12 October 2020** |

| Name and mailing address of the ISA/CN | Authorized officer |
|---|---|
| China National Intellectual Property Administration (ISA/ CN) No. 6, Xitucheng Road, Jimenqiao Haidian District, Beijing 100088 China | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2020/100598**

| Patent document cited in search report | | | Publication date (day/month/year) | Patent family member(s) | | | Publication date (day/month/year) |
|---|---|---|---|---|---|---|---|
| CN | 109118090 | A | 01 January 2019 | None | | | |
| CN | 104766237 | A | 08 July 2015 | None | | | |
| CN | 108615192 | A | 02 October 2018 | US | 2019057396 | A1 | 21 February 2019 |
| | | | | EP | 3444771 | A1 | 20 February 2019 |
| | | | | JP | 2019175416 | A | 10 October 2019 |
| US | 8527335 | B1 | 03 September 2013 | None | | | |

Form PCT/ISA/210 (patent family annex) (January 2015)